# EUROPÄISCHE PATENTSCHRIFT

(11) **EP 2 890 542 B1**
(45) Veröffentlichungstag und Bekanntmachung des Hinweises auf die Patenterteilung: **18.01.2023**
(21) Anmeldenummer: 13747789.9
(22) Anmeldetag: 26.07.2013
(51) Int. Cl.: B29C 35/08, B29C 71/04, B29C 37/00

(54) **ANLAGE ZUR STRAHLUNGSBEHANDLUNG VON SUBSTRATEN**
SYSTEM FOR THE RADIATION TREATMENT OF SUBSTRATES
INSTALLATION DE TRAITEMENT DE SUBSTRATS AU MOYEN D'UN RAYONNEMENT

(30) Priorität: 31.08.2012 DE 102012017230
(43) Veröffentlichungstag der Anmeldung: 08.07.2015
(73) Patentinhaber: Oerlikon Surface Solutions AG, Pfäffikon, 8808 Pfäffikon SZ (CH)
(72) Erfinder: RIBEIRO, Carlos, Phuong Nguyen Cu Trinh Q.1 Ho Chi Minh City (VN)
(74) Vertreter: Misselhorn, Hein-Martin
(86) Internationale Anmeldenummer: PCT/EP2013/002228
(87) Internationale Veröffentlichungsnummer: WO 2014/032754

(56) Entgegenhaltungen:
- DE-A1- 1 953 074
- JP-A- S57 137 133
- US-A- 4 336 279
- US-A- 6 072 158
- US-A1- 2011 300 497

## Beschreibung

Die vorliegende Erfindung bezieht sich auf eine Anlage zum Bestrahlen eines Substrates mit elektromagnetischer Strahlung, wie zum Beispiel Infrarotstrahlung (IR-Strahlung) zum Trocknen von Substraten und/oder ultraviolette Strahlung (UV-Strahlung) zum Vernetzen von UV-härtenden Lacken.

Solche Anlagen kommen beispielsweise als Bestandteil von Lackieranlagen zum Einsatz. Bei solchen Lackieranlagen wird in einem ersten Schritt die Substratoberfläche typischerweise gereinigt. Dies kann beispielsweise mit Hilfe von Luftdruck und/oder mit Mitteln zum Ionisieren der Oberfläche gemacht werden bzw. mittels Bestrahlen der Oberfläche mit einem flüssigen Medium, wie Wasser oder wässrige bzw. alkoholische oder lösemittelhaltige Lösung, oder mit einem Festkörper, wie Strahlgut oder CO2, oder mittels Tauchen der Substrate in eine wässrige bzw. alkoholische oder lösemittelhaltige Lösung, eventuell unter Einwirkung von Wellen, wie Ultraschall- oder Mikrowellen.

Im Falle der Reinigung mit flüssigen Medien kann es zur sich anschliessenden Trocknung bereits zum Einsatz von IR Wärmestrahlen kommen.

In einem zweiten Schritt wird dann die eigentliche Lackschicht beispielsweise mittels Aufsprühen einer Lackdispersion aufgebracht. Es folgt ein Schritt, während dessen das bereits belackte Substrat ausgebacken wird. Dies kann mittels Erwärmung in Umluft und/oder mittels Beaufschlagung mit Infrarotstrahlung (IR) bei zum Beispiel 50-80°C erfolgen. Dabei wird im Wesentlichen das üblicherweise in der Lackdispersion vorhandene Lösungsmittel verdunstet. Im Falle eines heute sehr weit verbreiteten UV-härtenden Lacks, d.h. eines Lackes, der mittels UV Licht vernetzt wird, erfolgt diese Härtung in einem der Lösungsmittelverdunstung sich anschliessenden Schritt. Entsprechend der Anwendung kommen bei diesen Prozessschritten IR- und/oder UV-Lampen zum Einsatz. In der vorliegenden Beschreibung wird der Prozess der Trocknung mittels IR-Strahlung und/oder der Prozess der Vernetzung mittels UV-Strahlung einheitlich als Strahlungsbehandlung bezeichnet.

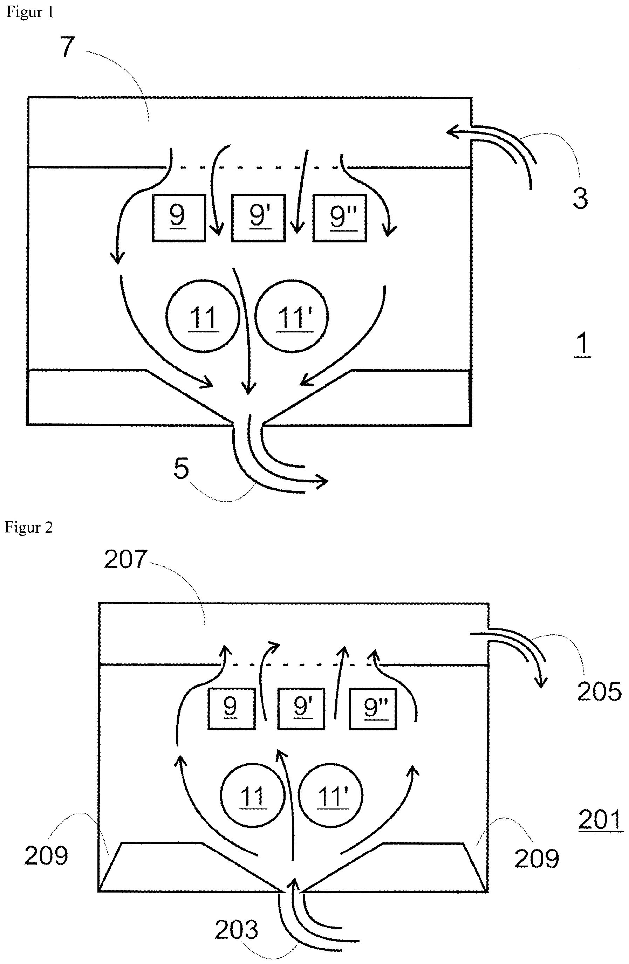

Um die freie Verflüchtigung der Lösungsmittel in die Umwelt bzw. in das Arbeitsumfeld zu verhindern, werden solche Prozesse gemäss Stand der Technik in Behandlungskammern durchgeführt. Es sollte dabei gewährleistet sein, dass es zu einem beständigen Gasaustausch kommt, um beispielsweise die Lösungsmittelkonzentration in der Substratumgebung niedrig zu halten und damit auch den Trocknungs- und/oder Vernetzungsprozess zu beschleunigen. Gemäss Stand der Technik wird, wie in Figur 1 schematisch dargestellt, die Strahlungsbehandlung in einer geschlossenen Kammer 1 durchgeführt. Dabei werden im oberen Teil der Kammer 1 die Strahlungsquelle 9, 9', 9" vorgesehen und im unteren Teil die mit den Substraten zu bestückenden Substrathalter 11, 11' platziert. Gezeigt als Substrathalter sind in der Figur 1 zwei Spindeln, welche mit zu bestrahlenden Komponenten bestückt werden können. Die Platzierung der Strahlungsquellen 9, 9', 9" unterhalb der Substrathalter 11, 11' wäre auch möglich, wird aber in der Regel vermieden, um nicht zu riskieren, dass die Strahlungsquellen 9, 9', 9" mit von den Substraten herabtropfenden Lackresten verschmutzt werden.

Gemäss Stand der Technik wird an der Kammerdecke ein Einströmbereich 7 vorgesehen, durch den, gespeist von einem Einlass 3, Gas wie zum Beispiel Luft in die Kammer strömt. Das Gas strömt gemäss Stand der Technik an den Strahlungsquellen 9, 9', 9" und anschliessend an den Substraten 11, 11' vorbei in den unteren Bereich der Kammer, wo es über den Auslass 5 aus der Kammer 1 abgesogen wird. Aufgrund dieser Anordnung gemäss Stand der Technik wirken Strömung und Gravitation zusammen, so dass Verschmutzungen, wie zum Beispiel Staub und auch Lösungsmittel, effektiv abgesaugt werden. In der Figur 1 ist der Gasstrom und dessen Richtung schematisch durch Pfeile dargestellt.

Nachteilig bei der Anordnung gemäss dem Stand der Technik ist allerdings, dass der Gasstrom, welcher an den Substraten vorbeiströmt, zunächst die Strahlungsquellen passieren muss. Diese sind im Betrieb in der Regel heiss, was zu einer unkontrollierten Erwärmung des Gasstromes führt. Dies bedeutet, dass die Substrathalter 11, 11' mit einem Gasstrom beaufschlagt werden, welcher keine definierte Temperatur besitzt und bei dem es über die Breite der Substrathalter sogar zu Temperaturgradienten kommen kann. Der Prozess des Trocknens und/oder Vernetzens wird jedoch stark von der vorherrschenden Temperatur beeinflusst. Undefinierte Temperaturbedingungen führen daher schnell zu einem unkontrollierten Prozess. Insbesondere wenn Temperaturgradienten vorliegen, kommt es zu Inhomogenitäten. Die Problematik wird dadurch noch verschärft, dass die Strahlungsquellen selbst in der Regel nicht temperaturstabilisiert sind. In der Anfangsphase werden die Strahlungsquellen eher kühl sein, während sie nach längerem Betrieb doch deutlich aufheizen. Dieses Problem könnte zwar durch explizite Kühlmassnahmen an den Strahlungsquellen reduziert werden. Allerdings sind solche Massnahmen mit erheblichem technischen Aufwand verbunden und somit teuer. US 2011/300497 A1 offenbart eine Anlage zur Strahlungsbehandlung gemäß dem Oberbegriff des Anspruchs 1.

Nach dem oben Gesagten wäre es wünschenswert, eine Anlage zur Strahlungsbehandlung zur Verfügung zu haben, mit der die oben geschilderten Probleme des Standes der Technik abgemildert und vorzugsweise vollständig überwunden werden.

Der Erfindung liegt daher die Aufgabe zugrunde, eine solche Anlage anzugeben.

Erfindungsgemäss werden die oben geschilderten Probleme durch eine Anlage gemäss Anspruch 1 gelöst. Die abhängigen Ansprüche stellen bevorzugte Ausführungsformen der vorliegenden Erfindung dar. Prinzipiell wurden die Probleme erfindungsgemäss dadurch gelöst, dass in der Kammer ein Gasstrom aufgebaut wird, welcher unmittelbar nach Eintritt in die Kammer an den Substraten vorbeiströmt. Da der Gasstrom zuvor nicht an den eventuell Wärme ausstrahlenden Strahlungsquellen vorbeiströmt, ist die Temperatur des Gasstroms wohldefiniert und kann auch in einfacher Weise auf einen gewünschten stabilen Wert eingestellt werden.

Die Erfindung und deren vorteilhafte Ausführungsformen werden nun anhand von Figuren im Detail beispielhaft beschrieben.
- Figur 1: zeigt eine Anlage zur Strahlungsbehandlung von Substraten gemäss dem Stand der Technik.
- Figur 2: zeigt eine erfindungsgemässe Anlage zur Strahlungsbehandlung von Substraten gemäss einer ersten Ausführungsform.
- Figur 3: zeigt eine erfindungsgemässe Anlage zur Strahlungsbehandlung von Substraten gemäss einer zweiten Ausführungsform.

Figur 2 zeigt eine erfindungsgemässe Anlage gemäss einer ersten Ausführungsform. Gezeigt ist eine Kammer 201, in der Strahlungsquellen 9, 9', 9" und zu bestrahlende Substrate 11, 11' angeordnet sind. In der Kammer ist unten, in der Nachbarschaft der Substrate 11, 11', ein Gaseinlass 203 vorgesehen. Im Bereich der Kammerdecke ist gemäss dieser Ausführungsform der Gasauslass 205 vorgesehen, dem eine Deckenkammer 207 vorgeschaltet sein kann. Im Betrieb der Anlage strömt nun das Gas nach dem Eintritt in die Kammer zunächst an den Substraten 11, 11' vorbei, bevor es die Strahlungsquellen 9, 9', 9" umströmt und durch die optionale Deckenkammer 207 über den Gasauslass 205 hinausströmt. Auf diese Weise ist die Temperatur des an den Substraten 11, 11' vorbeiströmenden Gases wohldefiniert und der Prozess kann bei genau vorgegebenen und stabilen Temperaturverhältnissen stattfinden. Es ist vorteilhaft, an den Randbereichen der Kammer Einformungen 209 vorzusehen, welche als Staubfänger fungieren können.

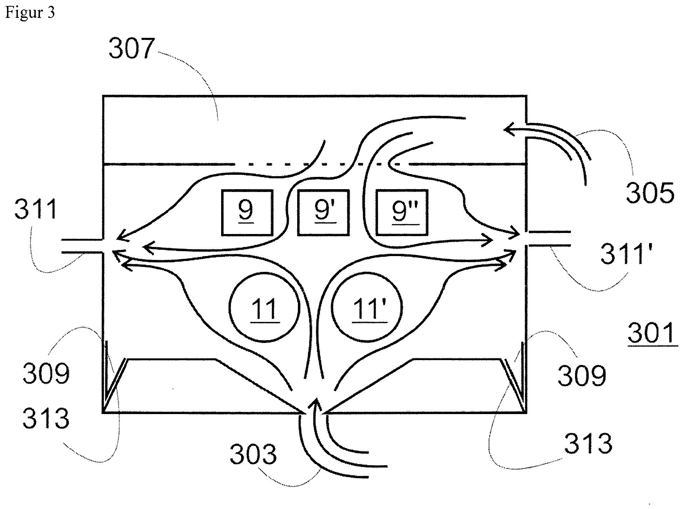

Eine zweite vorteilhafte Ausführungsform der vorliegenden Erfindung ist in Figur 3 gezeigt. Hierbei wird eine Kammer 301 mit Strahlungsquellen 9, 9', 9", welche über Substraten 11, 11' angeordnet sind, sowohl durch einen ersten Einlass 303 im unteren Bereich der Kammer, unterhalb der Substrate 11, 11', als auch durch einen zweiten Einlass 305 im oberen Bereich der Kammer, oberhalb der Strahlungsquellen 9, 9', 9", mit Gasflüssen beaufschlagt. Vorzugsweise auf halber Höhe der Kammer sind Auslässe 311, 311' vorgesehen, die bevorzugt symmetrisch angeordnet sind. Die beiden Gasströme treffen bei dieser Ausführungsform, wie in der Figur mittels Pfeile angedeutet, in etwa auf halber Höhe, d.h. zwischen Strahlungsquellen 9, 9', 9" und Substraten 11, 11', aufeinander und entweichen über die seitlich angeordneten Auslässe 311, 311' aus dem Kammerinnern. Diese besonders bevorzugte Ausführungsform der vorliegenden Erfindung hat insbesondere den Vorteil, dass im Gasstrom mittransportierte Staubpartikel tendenziell an den Kammerrand transportiert werden. Sind dort dann noch Einformungen 309 vorgesehen, welche als Staubfänger fungieren können, so wird eventuell in der Kammer vorhandener Staub, der hauptsächlich in Richtung zu den Auslässen 311, 311' transportiert wird, aber unterwegs aus dem Gasstrom ausscheidet, hauptsächlich in den Staubfängern aufgesammelt. Gemäss einer besonders bevorzugten Ausführungsform ist in den Einformungen 309 jeweils ein herausnehmbares Gefäss 313 vorgesehen, so dass sich in diesem Gefäss der Staub sammelt und dieser durch Herausnahme und Leerung des Gefässes einfach entsorgt werden kann. Natürlich lässt sich ein solches Gefäss auch bei den anderen Ausführungsformen der vorliegenden Erfindung vorteilhaft einsetzen.

Vorliegend wurde eine Anlage zur Strahlungsbehandlung von Substraten offenbart, welche in einer Kammer über den Substrathaltern zum Bestücken von zu behandelnden Substraten mindestens eine Strahlungsquelle umfasst und die Kammer Mittel zur Aufrechterhaltung eines Gasstromes in der Kammer mit zumindest einem Gaseinlass und zumindest einem Gasauslass umfasst, dadurch gekennzeichnet, dass der zumindest eine Gaseinlass im Bereich des Substrathalters angeordnet ist, dergestalt, dass durch den zumindest einen Gaseinlass einströmendes Gas zunächst die Substrathalter umströmt, bevor es entweder direkt und/oder nach Umströmung der mindestens einen Strahlungsquelle durch den Gasauslass wieder die Kammer verlässt.

Bei der Anlage kann der Gasauslass im Bereich der mindestens einen Strahlungsquelle vorgesehen sein, dergestalt, dass das Gas nach Umströmung der Substrathalter die mindestens eine Strahlungsquelle umströmt bevor es über den Gasauslass die Kammer verlässt.

Der Gasauslass kann auf einer Höhe zwischen Substrathalter und mindestens einer Strahlungsquelle vorgesehen sein.

Im Bereich der mindestens einen Strahlungsquelle kann ein zweiter Gaseinlass vorgesehen sein, dergestalt, dass durch den zweiten Gaseinlass einströmendes Gas zunächst die mindestens eine Strahlungsquelle umströmt, bevor es auf das von den Substrathaltern heranströmende Gas trifft und mit diesem durch den Gasauslass aus der Kammer hinausströmt.

Am unteren Kammerrand können Einformungen vorgesehen sein, derart, dass im Bereich der Einformungen die Strömung herabgesetzt ist und die Einformungen dementsprechend als Staubfänger Wirkung entfalten.

Es können in den Einfomungen herausnehmbare Gefässe vorgesehen sein.

## Patentansprüche

1. Anlage zur Strahlungsbehandlung von Substraten, welche in einer Kammer (1, 201, 301) über den Substrathaltern (11, 11') zum Bestücken von zu behandelnden Substraten mindestens eine Strahlungsquelle (9, 9', 9") umfasst und die Kammer (1, 201, 301) Mittel zur Aufrechterhaltung eines Gasstromes in der Kammer (1, 201, 301) mit zumindest einem Gaseinlass (3, 203, 303) und zumindest einem Gasauslass (5, 205, 311, 311') umfasst, wobei der zumindest eine Gaseinlass (3, 203, 303) im Bereich des Substrathalters (11, 11') angeordnet ist, dergestalt, dass durch den zumindest einen Gaseinlass (3, 203, 303, 305) einströmendes Gas zunächst die Substrathalter (11, 11') umströmt, bevor es entweder direkt und/oder nach Umströmung der mindestens einen Strahlungsquelle (9, 9', 9") durch den Gasauslass (5, 205, 311, 311') wieder die Kammer (1, 201, 301) verlässt, **dadurch gekennzeichnet, dass** am unteren Kammerrand Einformungen (209, 309) vorgesehen sind, dergestalt, dass im Bereich der Einformungen (209, 309) die Strömung herabgesetzt ist und die Einformungen (209, 309) dementsprechend als Staubfänger Wirkung entfalten.

2. Anlage nach Anspruch 1, **dadurch gekennzeichnet, dass** der Gasauslass (205) im Bereich der mindestens einen Strahlungsquelle (9, 9', 9") vorgesehen ist, dergestalt, dass das Gas nach Umströmung der Substrathalter (11, 11') die mindestens eine Strahlungsquelle (9, 9', 9") umströmt, bevor es über den Gasauslass (205) die Kammer verlässt (201).

3. Anlage nach Anspruch 1, **dadurch gekennzeichnet, dass** der mindestens eine Gasauslass (311, 311') auf einer Höhe zwischen Substrathalter (11, 11') und mindestens einer Strahlungsquelle (9, 9', 9") vorgesehen ist.

4. Anlage nach Anspruch 3, **dadurch gekennzeichnet, dass** im Bereich der mindestens einen Strahlungsquelle (9, 9', 9") ein zweiter Gaseinlass (305) vorgesehen ist dergestalt, dass durch den zweiten Gaseinlass (305) einströmendes Gas zunächst die mindestens eine Strahlungsquelle (9, 9', 9") umströmt, bevor es auf das von den Substrathaltern (11, 11') heranströmende Gas trifft und mit diesem durch den Gasauslass (311, 311') aus der Kammer (301) hinausströmt.

5. Anlage nach einem der vorhergehenden Ansprüche, **dadurch gekennzeichnet, dass** zumindest teilweise in den Einfomungen (209, 309) herausnehmbare Gefässe (313) vorgesehen sind.

## Claims

1. A system for the radiation treatment of substrates comprising at least one radiation source (9, 9', 9") in a chamber (1, 201, 301) above the substrate holders (11, 11') for fitting substrates to be treated and the chamber (1, 201, 301) comprises means for maintaining a gas flow in the chamber (1, 201, 301) with at least one gas inlet (3, 203, 303) and at least one gas outlet (5, 205, 311, 311'), **wherein** the at least one gas inlet (3, 203, 303) is disposed in the region of the substrate holder (11, 11') in such a way that gas flowing in through the at least one gas inlet (3, 203, 303, 305) first flows around the substrate holders (11, 11') prior to leaving the chamber (1, 201, 301) again, either directly and/or after flowing around the at least one radiation source (9, 9', 9") through the gas outlet (5, 205, 311, 311'), **characterized in that** indentations (209, 309) are provided at the lower edge of the chamber in such a way that the flow is reduced in the region of the indentations (209, 309) and, accordingly, the indentations (209, 309) act as dust collectors.

2. The system according to claim 1, **characterized in that** the gas outlet (205) is provided in the region of the at least one radiation source (9, 9', 9") in such a way that the gas, subsequent to flowing around the substrate holders (11, 11'), flows around the at least one radiation source (9, 9', 9") before leaving the chamber (201) via the gas outlet (205).

3. The system according to claim 1, **characterized in that** the at least one gas outlet (311, 311') is provided at a level between the substrate holder (11, 11') and at least one radiation source (9, 9', 9").

4. The system according to claim 3, **characterized in that** a second gas inlet (305) is provided in the region of the at least one radiation source (9, 9', 9") in such a way that gas flowing in through the second gas inlet (305) first flows around the at least one radiation source (9, 9', 9") prior to encountering gas that flows from the substrate holders (11, 11'), and the gas flowing in through the second gas inlet flows out of the chamber (301) through the gas outlet (311, 311') together with the gas that flows from the substrate holders.

5. The system according to one of the preceding claims, **characterized in that** removable containers (313) are provided, at least partially, in the indentations (209, 309).

## Revendications

1. Installation servant au traitement par rayonnement de substrats et comprenant au moins une source de rayonnement (9, 9', 9") dans une chambre (1, 201, 301) au-dessus des porte-substrats (11, 11') équipés des substrats à traiter et la chambre (1, 201, 301) comprend des moyens destinés à maintenir un flux de gaz dans la chambre (1, 201, 301) avec au moins une entrée de gaz (3, 203, 303) et au moins une sortie de gaz (5 , 205, 311, 311'), la au moins une entrée de gaz (3, 203, 303) étant disposée dans la région du porte-substrat (11, 11') de telle sorte que le gaz affluant à travers la au moins une entrée de gaz (3, 203, 303, 305) coule d'abord autour des porte-substrats (11, 11') avant de quitter à nouveau la chambre (1, 201, 301), soit directement et/ou après avoir coulé autour de la au moins une source de rayonnement (9, 9' , 9"), à travers la sortie de gaz (5, 205, 311, 311'), **caractérisée en ce que** des indentations (209, 309) sont prévues au bord inférieur de la chambre de telle manière que le débit est réduit dans la région des indentations (209, 309) et, par conséquent, les indentations (209, 309) agissent comme des collecteurs de poussière.

2. L'installation selon la revendication 1, **caractérisée en ce que** la sortie de gaz (205) est prévue dans la région de la au moins une source de rayonnement (9, 9', 9") de telle manière que le gaz, après avoir coulé autour des porte-substrats (11, 11'), coule autour de la au moins une source de rayonnement (9, 9', 9") avant de quitter la chambre (201) via la sortie de gaz (205).

3. L'installation selon la revendication 1, **caractérisée en ce que** la au moins une sortie de gaz (311, 311') est prévue à un niveau entre le porte-substrat (11, 11') et au moins une source de rayonnement (9, 9', 9").

4. L'installation selon la revendication 3, **caractérisée en ce qu'**une seconde entrée de gaz (305) est prévue dans la région de la au moins une source de rayonnement (9, 9', 9") de telle sorte que le gaz affluant à travers la seconde entrée de gaz (305) coule d'abord autour de la au moins une source de rayonnement (9, 9', 9") avant de rencontrer le gaz qui afflue des porte-substrats (11, 11'), et de sortir avec celui-ci, à travers la sortie de gaz (311, 311'), de la chambre (301).

5. L'installation selon l'une des revendications précédentes, **caractérisée en ce que** des récipients amovibles (313) sont prévus, au moins partiellement, dans les indentations (209, 309).
